# EUROPÄISCHE PATENTSCHRIFT

(11) **EP 4 088 903 B1**
(45) Veröffentlichungstag und Bekanntmachung des Hinweises auf die Patenterteilung: **20.11.2024**
(21) Anmeldenummer: 22170504.9
(22) Anmeldetag: 28.04.2022
(51) Int. Cl.: B29C 45/16, G01S 7/02, G01S 13/931, H01Q 1/42, B29C 45/14, B29C 45/00, B05D 1/02, B05D 1/18, B29L 31/34

(54) **ABDECKELEMENT FÜR SENSOREN, SOWIE VERFAHREN ZUR HERSTELLUNG DES ABDECKELEMENTS**
COVER ELEMENT FOR SENSORS AND METHOD FOR MANUFACTURING THE COVER ELEMENT
ÉLÉMENT DE RECOUVREMENT POUR CAPTEURS; AINSI QUE PROCÉDÉ DE FABRICATION DE L'ÉLÉMENT DE RECOUVREMENT

(30) Priorität: 06.05.2021 DE 102021204629
(43) Veröffentlichungstag der Anmeldung: 16.11.2022
(73) Patentinhaber: Magna Exteriors GmbH, 63877 Sailauf (DE)
(72) Erfinder: PAULE, Thomas, 63864 Glattbach (DE); WEIMER, Frank, 97877 Wertheim (DE); HUTTENLOCHER, Marc, 72622 Nürtingen (DE)
(74) Vertreter: Rausch, Gabriele

(56) Entgegenhaltungen:
- DE-A1- 102015 004 204
- DE-A1- 102016 007 119
- DE-A1- 102017 214 129
- DE-A1- 102018 220 997

## Beschreibung

Die Erfindung betrifft ein Abdeckelement mit einem Gehäuse einer zwischen einer Frontplatte und einer Trägerplatte eingeformten und eingespritzten Folie, die zur Darstellung von dreidimensionalen Strukturen dient und einer Trägerplatte, die rückseitig mit einer Heizplatte verbunden ist.

Die Erfindung betriff auch ein Verfahren zum Herstellen des Abdeckelements.

### Stand der Technik

Funktionsbedingt müssen Radarsensoren für die Fahrumfelderfassung an hochgradig designrelevanten Positionen, insbesondere innerhalb der Fahrzeugfront oder des Fahrzeughecks, verbaut werden. Aufgrund der derzeit stark unterschiedlichen Frequenzbereiche von Nah- und Fernbereichsradarsensoren ergeben sich bei deren Integration unterschiedliche Situationen:
Radarsensoren werden im Frequenzbereich zwischen 76 und 81 GHz betrieben.

In diesem Frequenzbereich ist bei einigen Lackfarben (z. B. Silber-Metallic), die eine hohe Konzentration an Metallpartikeln aufweisen, eine Platzierung hinter lackierten Kunststoffflächen mit hohen Reflexionen verbunden. Deshalb wird eine Integration dieser Sensoren hinter in Wagenfarbe lackierten Flächen weitgehend vermieden.

Einige Hersteller favorisieren offen sichtbare Sensoren. Häufig werden die Sensoren in einer Öffnung im unteren Teil des Stoßfängers platziert.

Der andere Ansatz besteht in einem weitgehend unauffälligen Einbau, der eine Abdeckung des Radarsensors notwendig macht. Ein verbreiteter Einbauort dieser abgedeckten Sensoren stellt der Bereich des Kühlergrills dar. Aber gerade der Kühlergrill ist ein wesentliches Gestaltungselement mit hohem Wiedererkennungswert für eine Marke. Eine solche Radarabdeckung, ein sogenanntes Radom, soll sich idealerweise den Erfordernissen des Fahrzeugdesigns anpassen sowie hinsichtlich der Wellenausbreitung möglichst neutral verhalten. Hier kann es zu konkurrierenden Forderungen kommen, die keinen in jeder Hinsicht optimalen Einbau zulassen.

Werden Radargeräte bei Umgebungsbedingungen mit Temperaturen um und unter dem Gefrierpunkt eingesetzt, kann es zu einer Eisbildung auf dem Radom kommen. Aufgrund der zusätzlichen Eisschicht auf dem Radom ist ein ordnungsgemäßer Betrieb des Radargeräts nicht oder nur eingeschränkt möglich.

Radome sind Abdeckungen von Sendern und/oder Empfängern elektromagnetischer Strahlung, beispielsweise von Radargeräten und/oder deren Antennen. Durch ein Radom soll eine Beeinträchtigung beispielsweise des Radargeräts durch Umwelteinflüsse vermieden werden. Radome bestehen aus einem Material, zumeist Kunststoff, durch das hindurch die jeweilige Strahlung, beispielsweise Radarstrahlung abgestrahlt und reflektierte Radarstrahlung empfangen werden kann.

Aus der DE 10 2013 016 667 A1 ist ein Radom in Form eines mehrlagigen Abdeckelements bekannt, wobei zumindest eine erste Lage aus einem transparenten Kunststoff gebildet ist. Zwischen der ersten Lage und einer zweiten Lage ist eine Grenzschicht ausgebildet, die aus einer Streustruktur und einer metallischen Struktur gebildet ist. Die Streustruktur ist abschnittsweise von der metallischen Struktur unterbrochen. Das Radom ist mittels in die Streuschicht eingekoppelten Lichts beleuchtbar.

Aus der DE 10 2015 004 204 A1 ist ein Radom bekannt, das eine Frontseite und eine Rückseite aufweist und mindestens eine Einkoppelstruktur zum Einkoppeln von Licht in das Radom umfasst. Zudem weist das Radom mindestens ein Heizelement auf. Das Radom stellt ein Fahrzeugherstelleremblem dar. Das Zeichen wird durch eine metallische Struktur gebildet. Hierbei wird ein Fahrzeugdesign bei gleichbleibender Leistungsfähigkeit des Radargeräts aufgewertet. Dabei ist zu beachten, dass diese metallische Struktur, zumindest wenn sie im Bereich der Radarstrahlung ist, so dünn sein muss, dass sie noch radardurchlässig ist. So wird beispielsweise Indium in nur wenigen µm auf das Radom aufgedampft.

DE 10 2018 220997 A1 zeigt ein Abdeckelement mit einem Gehäuse einer zwischen einer Frontplatte und einer Trägerplatte eingeformten und umspritzten Folie, die zur Darstellung von mehrdimensionalen Strukturen dient, da tiefgezogen), wobei das Gehäuse aus einer ringförmigen Gehäusebasis und einer vollflächigen. kreisförmigen Gehäusefront besteht, und in der Gehäusebasis ein Leiterplattenring mit LEDs eingebaut ist.

DE 10 2017 214 129 A1 betrifft ein Emblem für ein Fahrzeug, welches beleuchtbar und zusätzlich mit einer Radarfunktionalität ausgestattet ist. Ferner betrifft die Erfindung ein Kraftfahrzeug mit einem solchen Emblem. Das Emblem umfasst einen Flächenlichtleiter, der in einem Gehäuse angeordnet und mit Licht einer LED gespeist werden kann. Das Licht kann an einer Auskoppelseite des Lichtleiters in Richtung einer Lichtscheibe ausgekoppelt werden, wobei die Lichtscheibe das Gehäuse nach außen hin schließt. Ein Radarsensor ist derart angeordnet, dass seine Radarstrahlung durch die Bauteile des radarfähigen Leuchtemblems hindurch und aus der Lichtscheibe austreten kann. Zwischen der Lichtscheibe und dem Flächenlichtleiter ist ein Element mit lichtundurchlässigen und lichtdurchlässigen Bereichen angeordnet, welches das nach außen hin sichtbare Emblem bildet. Durch Hinterleuchtung dieses Elements im Bereich der lichtdurchlässigen Bereiche ergibt sich nach außen hin ein Leuchtemblem.

DE 10 2016 007 119 A1 betrifft ein Radom, umfassend eine Frontseite, eine Rückseite und zumindest eine in der Rückseite ausgebildete Einkoppelstruktur zum Einkoppeln von Licht. An der Rückseite ist mindestens ein Lichtleiter zur Übertragung des eingekoppelten Lichts angeordnet, wobei zumindest ein Lichtaustrittsbereich des zumindest einen Lichtleiters transluzent ausgebildet ist und wobei der Lichtaustrittsbereich zumindest in Richtung des Lichtaustritts vollständig von einer optisch nicht aktiven Komponente bedeckt ist.

DE 10 2015 004 204 A1 betrifft ein Radom, aufweisend eine Frontseite, eine Rückseite und mindestens eine Einkoppelstruktur zum Einkoppeln von Licht in das Radom. Das Radom weist mindestens ein Heizelement auf.

Es ist Aufgabe der Erfindung, ein verbessertes Abdeckelement vorzuschlagen, das die Vorteile von Beleuchtung und Heizung umfasst, aber die Radardurchstrahlung nicht behindert.

### Beschreibung der Erfindung

Die Aufgabe wird gelöst mit einem Abdeckelement mit einem Gehäuse einer zwischen einer Frontplatte und einer Trägerplatte eingeformten und eingespritzten Folie, die zur Darstellung von dreidimensionalen Strukturen dient und der Trägerplatte, die rückseitig mit einer Heizplatte verbunden ist, wobei das Gehäuse aus einer ringförmigen Gehäusebasis und einer ringförmigen Gehäusefront besteht, und in der Gehäusebasis ein Leiterplattenring mit LEDs und Stecker eingebaut ist.

Der Vorteil dieser Ausgestaltung liegt darin, dass alle elektrischen Komponenten und deren Zuleitungen sich innerhalb des Gehäuses, als innerhalb eines ringförmigen Bereichs befinden. Dadurch deckt das Gehäuse diese Komponenten nach außen hin ab. Der mittlere Bereich des Abdeckelements bleibt ungestört von Komponenten, die einen Durchtritt von Radarstrahlen negativ beeinflussen.

Das Licht der LEDs koppelt über eine Optik in die Trägerplatte ein, wobei diese Einkopplung eben innerhalb der Ringstruktur des Gehäuses stattfindet und so von außen nicht wahrgenommen wird und auch die Radarstrahlen nicht stört.

Es ist dabei von Vorteil, dass die Optik ein Teil der Trägerplatte ist und so einfach hergestellt werden kann.

Die Optik ist ein Konus, der sich von der Trägerplatte aus auf die LEDs hin erstreckt.

Es ist von Vorteil, dass die Folie sich im Bereich der Optik in einem Winkel gegen die Ebene der Folie auf die Optik hin erstreckt. Dadurch wird das Licht der LEDs auf optimale Weise in die Trägerplatte eingekoppelt und kann sich in der Lichtleiterstruktur der Trägerplatte verteilen.

Dabei wird das Licht zwischen der Folie und der Oberseite der Heizplatte in der Trägerplatte als Lichtleiter geführt.

Um das Licht auszukoppeln wird durch Wahl des Materials der Oberseite der Heizplatte oder durch Einbauten von geometrischen Strukturen die Totalreflexion unterbrochen und das Licht durch die Folie und die Frontplatte partiell ausgekoppelt.

Die Befestigung des Leiterplattenringes erfolgt über an der Heizplatte umgeformte Stifte. Diese Befestigung liegt außerhalb des mittigen Bereichs des Abdeckelement, sodass auch hier die Durchdringung durch Radarsignale nicht behindert wird.

Die Aufgabe wird des Weiteren gelöst mit einem Verfahren zur Herstellung eines Abdeckelements durch folgende Schritte gekennzeichnet:
- in einem ersten Schritt wird die im HPF Verfahren vorgeformte Folie in die erste Kavität des 2k Werkzeugs eingelegt und transparent überspritzt,
- im zweiten Schritt wird die Heizplatte in die zweite Werkzeughälfte des Spritzgusswerkzeugs eingelegt,
- das Werkzeug wird gedreht. Danach wird das transparente Material der Trägerplatte zwischen die erste Komponente und der Heizplatte eingespritzt,
- im dritten Schritt wird das gespritzte Paket hartlackiert oder in einen Hartlack getaucht.

### Beschreibung der Figuren

Figur 1 zeigt eine Seitenansicht eines Abdeckelements,
Fig. 2 zeigt eine Aufsicht auf die im Fahrzeuginneren liegenden Seite des Abdeckelements,
Fig. 3 ist einen Explosionsdarstellung des Abdeckelements,
Fig. 4 zeigt eine Schnittdarstellung durch den Rand des Abdeckelements,
Fig. 5 zeigt einen Schnitt,
Fig. 6 zeigt einen Schnitt durch den Randbereich,
Fig. 7 zeit die Herstellungsschritte des Abdeckelements.

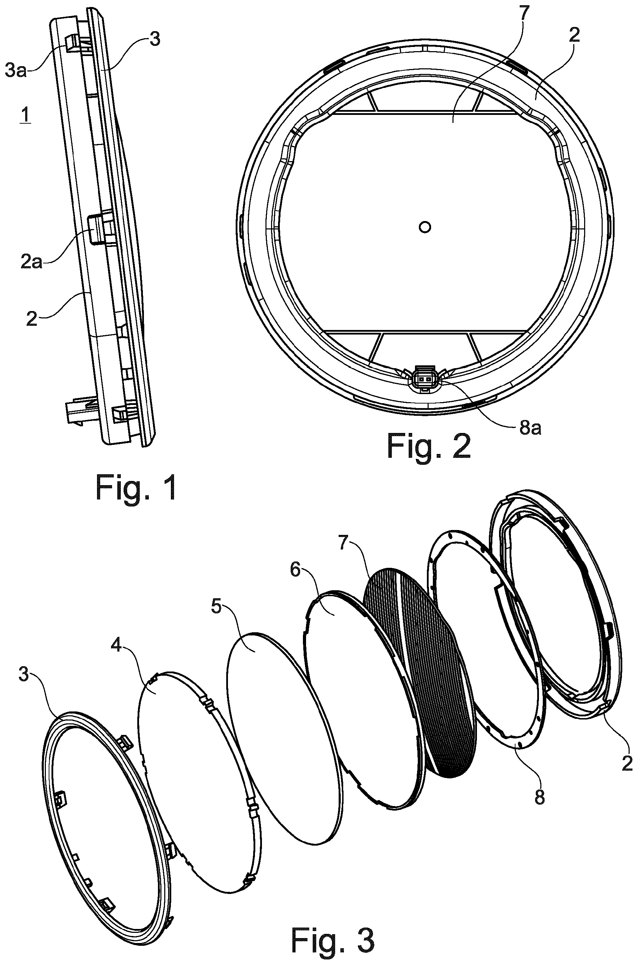

In der Figur 1 ist das Abdeckelement 1 von der Seite dargestellt. Das Abdeckelement 1 weist ein Gehäuse auf, das aus einer Gehäusefront 3 und einer Gehäusebasis 2 besteht. Die beiden ringförmig ausgestalten Gehäuseteile sind über Haken 3a, die in Eingriffe 2a verklipst sind, miteinander verbunden. Wie auch aus der Figur 3 zu erkennen ist, sind dabei mehrere Haken 3a entlang des Radius der Gehäusefront 3 verteilt angeordnet. Die Gehäusebasis 2 weist ebenfalls über ihren Radius hinweg die entsprechenden Eingriffe 2a auf.

Figur 3 zeigt den gesamten Aufbau des Abdeckelements 1 mit allen einzelnen Schichten, die zum Teil direkt miteinander verbunden hergestellt werden.

Vom Fahrzeugäußeren gesehen ist die Gehäusefront 3 zusammen mit einer Frontplatte 4 erkennbar. Die Frontplatte 4 deckt eine Folie 5 ab, bei der es sich um eine metallisierte oder eine teilmetallisierte Folie handelt. Die Folie 5 kann auch teilweise oder komplett mit einem Farbauftrag versehen sein. Die Folie 5 wird von einer Trägerplatte 6 getragen, auf deren in das Fahrzeuginnere gerichteten Seite eine Heizplatte 7 angebracht ist. Die Bauteile Frontplatte 4, Folie 5, Trägerplatte 6 und Heizplatte 7 sind Bestandteile eines kombinierten Spritzguss Verfahrens, auf das später noch eingegangen wird.

Als weiteres Bauteil des Abdeckelements 1 ist ein Leiterplattenring 8 zu erkennen. Das gesamte Bauteil wird mit der ringförmigen Gehäusebasis 2 abgeschlossen.

Zur Darstellung eines Emblems im Abdeckelement kann die Folie 5 sowie die Trägerplatte 6 eine geometrisch mehrdimensionale Struktur, also zwei oder dreidimensional, aufweisen. Damit sind erweiterte Gestaltungsmöglichkeiten unabhängig von den reinen Beschichtungen möglich.

In Figur 2 ist eine Sicht aus dem Fahrzeuginneren auf das Abdeckelement 1 dargestellt. Dabei ist die Rückseite der Heizplatte 7 sichtbar. Die horizontalen Linien, die als Sekanten die kreisförmige Heizplatte schneiden, definieren eine Innenfläche, die für den ungestörten Durchtritt der Radarstrahlen vorgesehen ist.

An einer Stelle der Gehäusebasis 2 ist ein Ausschnitt vorhanden, durch den ein Stecker 8a von dem Leiterplattenring 8 nach außen geführt ist.

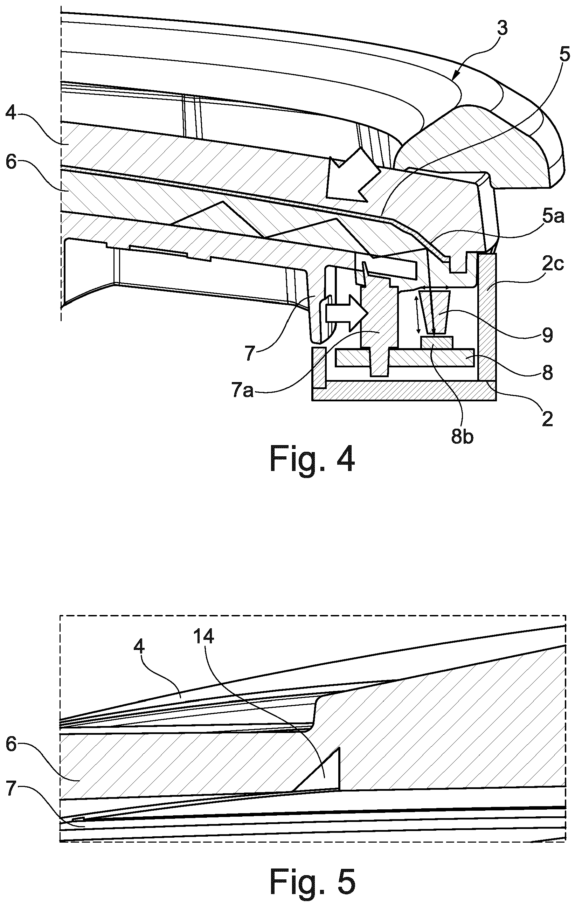

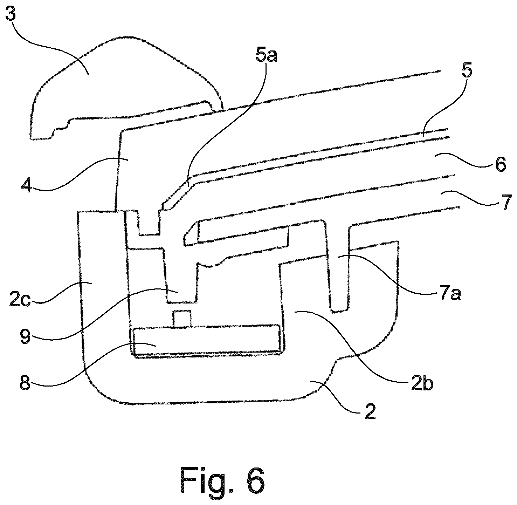

In Figur 4 sowie in der Figur 6 ist ein Schnitt durch einen Randbereich des Abdeckelements 1 dargestellt. Zu erkennen ist der Aufbau der einzelnen Komponenten beginnend von der Gehäusefront 3, der Frontplatte 4, der Folie 5, und der Trägerplatte 6. Die Heizplatte 7 weist Stifte 7a auf, die entlang des Außenrandes der Heizplatte 7 verteilt angeordnet sind. Diese Stifte 7a greifen in Ausnehmungen des Leiterplattenrings 8 ein und werden geeignet mit dem Leiterplattenring verbunden. Alternativ dazu können sich die Stifte 7a auch durch den Leiterplattenring 8 hindurch bis zur Gehäusebasis 2 erstrecken und dort verbunden werden. Beispielsweise erfolgt das Verbinden mit Ultraschallvernietung. Auf dem Leiterplattenring 8 sind LEDs 8b entlang des Randes des Leiterplattenrings 8 verteilt. Der Leiterplattenring 8 wird in der Gehäusebasis 2 gehalten. Die LEDs strahlen über jeweils eine Optik 9 in die Trägerplatte 6 ein, die sich oberhalb des Leiterplattenrings 8 bis zur äußeren Wandung der Gehäusebasis 2 einen Schenkel 2c erstreckt. Das Licht der LEDs wird an der Folie 5 und an der Oberfläche der Heizplatte 7 totalreflektiert. So verteilt sich das Licht entlang der Trägerplatte 6. Ein Teil des Lichts, das die Folie 5 nicht trifft, wird als Streulicht in die Frontplatte abgegeben, wo es dann an der Oberfläche durch Totalreflexion abgelenkt wird. Das Streulicht befindet sich aber im Bereich der ringförmigen Gehäusefront, diesen Bereich abschirmt und so Streulicht von außen unsichtbar werden lässt.

Die Folie 5 weist im Bereich des direkten Strahlengangs der LEDs eine geneigte Fläche 5a auf, die die Einkopplung optimiert. Optimal ist dabei ein Neigungsgrad von 45°, die die Fläche 5a abknickend von der Ebene der Folie 5 aufweist.

Da das eingekoppelte Licht über Totalreflexion entlang der Trägerplatte 6 wandert, muss man Vorkehrungen treffen, um Licht auch nach außen austreten zu lassen.

Dazu dient entweder die Beschichtung oder Farbe oder Metallisierung der Heizplatte 7, die den Effekt der Totalreflexion geeignet über die gesamte Fläche oder in den Abschnitten, die deinem Emblem entsprechen, vermindert.

In der Figur 5 wird eine alternative Möglichkeit aufgezeigt, um Licht aus der Trägerplatte aus zu koppeln. Dazu werden auf der Heizplatte 7 Rippen 14 ausgestaltet. Die Rippen werden unterhalb einer Struktur, die ein Emblem darstellt, ausgebildet, sodass an diesen Stellen besonders viel Licht ausgekoppelt wird. Die Auskoppelstrukturen sind dabei Rippen unterschiedlicher Form und Ausdehnung sowie Gruppierungen von Rippen.

Figur 6 zeigt eine alternative Ausführungsform. Die Heizplatte 7 ist dabei so ausgestaltet, dass die Stifte 7a in Ausnehmungen der Gehäusebasis 2 eingreifen. In der Gehäusebasis 2 ist der Leiterplattenring 8 zwischen zwei Schenkeln 2b und 2c eingebettet.

Die Optik 9 ist ein Teil der Trägerplatte 6, die sich bis an den Schenkeln 2c der Gehäusebasis 2 hin erstreckt. Die Folie 5 endet mit der abknickenden Fläche 5a in dem Bereich, in dem die Optik 9 als konusartige Ausbildung der Trägerplatte 6 verläuft.

Eine weitere Alternative stellt ein Leiterplattenring 8 dar, der direkt mit der Gehäusebasis 2 verklebt oder verschweißt ist.

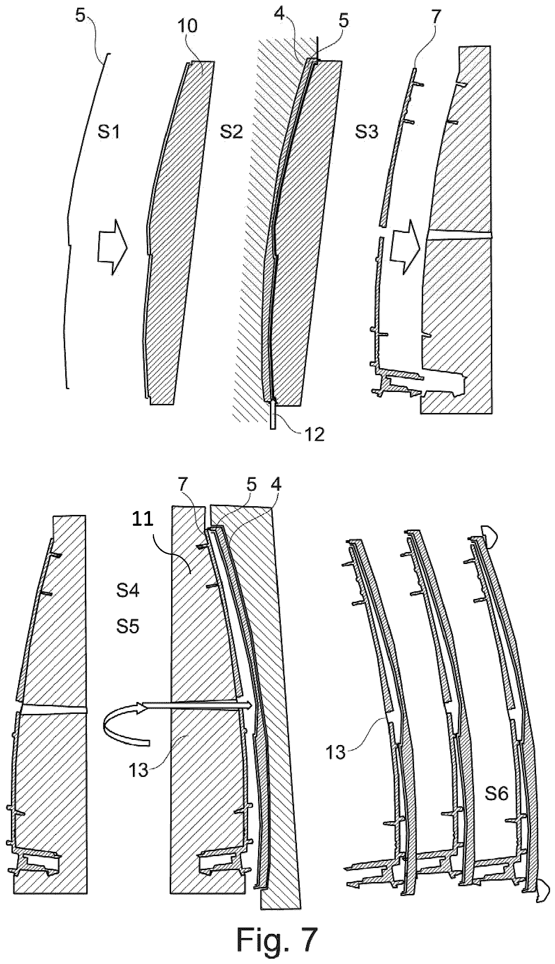

Figur 7 zeigt den Herstellungsprozesse in aufeinanderfolgenden Schritten S1 bis S5. Folie 5 ist in einem Hochdruckverformverfahren hergestellt und weist einen zwei- oder dreidimensionale Struktur auf. Bei diesem Verfahren wird eine Kunststofffolie, die in der Regel durch Bedrucken der Rückseite dekoriert wird, geformt und in Kontur gebracht, bevor sie in ein Spritzgusswerkzeug gegeben wird.

In einem ersten Schritt S1 wird die Folie 5 in eine erste Werkzeughälfte des Spritzgusswerkzeugs eingelegt.

Im zweiten Schritt S2 wird die Folie transparent überspritzt und so die erste Komponente als transparent überspritzte Folie hergestellt. Der transparente Bereich bildet die Frontplatte 4. Die Angussstelle 12 des Spritzgussverfahrens liegt am Rand des Werkzeugs.

Im Schritt S3 wird die Heizplatte 7 mit dem Heizdraht und den Kontaktpins in die zweite Werkzeughälfte 11 des Spritzgusswerkzeugs eingelegt und das Werkzeug im Schritt S4 gedreht, so dass von derselben Seite wie bei der ersten Komponente das Einspritzen erfolgen kann. Die Heizplatte 7 weist eine mittige Öffnung auf, die als Angussöffnung 13 dient.

Die Trägerplatte 6 wird dann im Schritt S5 mit einem transparenten Material zwischen der ersten Komponente Folie 5 + Trägerplatte 6 und der Heizplatte 7 gespritzt.

Als Resultat erhält man einen Verbund von Schichten unter Luftausschluss. Der Verbund ist dicht und kann einfach weiterverarbeitet werden.

Im letzten Schritt S6 wird das gespritzte Paket frontseitig hartlackiert oder in einen Hartlack getaucht. In einem letzten Schritt wird die Gehäusefront 3, als Chromring ausgestaltet, aufgeklipst.

### Bezugszeichenliste

1 Abdeckelement
2 Gehäusebasis
2a Eingriffe
2b, 2c Schenkel
3 Gehäusefront
3a Haken
4 Frontplatte
5 Folie
5a Fläche
6 Trägerplatte
7 Heizplatte
7a Stift
8 Leiterplattenring
8a Stecker
8b LED
9 Optik
10 Erste Werkzeughälfte
11 zweite Werkzeughälfte
12 Randnaher Anguss
13 mittiger Anguss
14 Rippe

## Patentansprüche

1. Abdeckelement (1) mit einem Gehäuse einer zwischen einer Frontplatte (4) und einer Trägerplatte (6) eingeformten und umspritzten Folie (5), die zur Darstellung von mehrdimensionalen Strukturen dient, wobei die Trägerplatte (6) rückseitig mit einer Heizplatte (7) verbunden ist, **dadurch gekennzeichnet, dass** das Gehäuse aus einer ringförmigen Gehäusebasis (2) und einer ringförmigen Gehäusefront (3) besteht, und in der Gehäusebasis (2) ein Leiterplattenring (8) mit LEDs (8b) und Stecker (8a) eingebaut ist.

2. Abdeckelement (1) nach Anspruch 1, **dadurch gekennzeichnet, dass** das Licht der LEDs über eine Optik (9) in die Trägerplatte einkoppelt.

3. Abdeckelement (1) nach Anspruch 2, **dadurch gekennzeichnet, dass** die Optik (9) ein Teil der Trägerplatte (6) ist.

4. Abdeckelement (1) nach Anspruch 2 oder 3, **dadurch gekennzeichnet, dass** die Optik (9) ein Konus ist, der sich von der Trägerplatte (6) aus auf die LEDs (8b) hin erstreckt.

5. Abdeckelement (1) nach einem der vorhergehenden Ansprüche 2 bis 4, **dadurch gekennzeichnet, dass** die Folie (5) sich im Bereich der Optik (9) in einem Winkel gegen die Ebene der Folie (5) auf die Optik (9) hin erstreckt.

6. Abdeckelement (1) nach einem der vorhergehenden Ansprüche, **dadurch gekennzeichnet, dass** das Licht der LEDs (8b) zwischen der Folie (5) und der Oberseite der Heizplatte (7) geführt ist.

7. Abdeckelement (1) nach einem der vorhergehenden Ansprüche, **dadurch gekennzeichnet, dass** das Licht der LEDs (8b) durch Wahl des Materials der Oberseite der Heizplatte (7) oder durch Einbauten von geometrischen Strukturen auf der Heizplatte (7) durch die Folie (5) und die Frontplatte (4) ausgekoppelt wird.

8. Abdeckelement (1) nach einem der vorhergehenden Ansprüche, **dadurch gekennzeichnet, dass** die Heizplatte (7) über Stifte (7a) in Aussparungen des Leiterplattenrings (8) oder in Aufnahmen der Gehäusebasis (2) befestigt ist.

9. Verfahren zur Herstellung eines Abdeckelements (1) nach den Ansprüchen 1 bis 8 durch folgende Schritte gekennzeichnet:
- in einem ersten Schritt (S1) wird die Folie (5) in eine erste Werkzeughälfte (10) des Spritzgusswerkzeugs eingelegt,
- im zweiten Schritt (S2) wird die Folie (5) transparent überspritzt und so die Frontplatte (4) hergestellt,
- im dritten Schritt (S3) wird die Heizplatte (7) in die zweite Werkzeughälfte (11) des Spritzgusswerkzeugs eingelegt,
- das Werkzeug wird im vierten Schritt (S4) gedreht und die Heizplatte (7) wird dann mit einem transparenten Material der Trägerplatte (6) überspritzt (S5),
- im Schritt S6 wird das gespritzte Paket hartlackiert oder in einen Hartlack getaucht.

## Claims

1. Cover element (1) having a housing of a film (5) that is formed and moulded between a front plate (4) and a carrier plate (6) and is used to represent multidimensional structures, the carrier plate (6) being connected on the rear side to a heating plate (7), **characterized in that** the housing consists of an annular housing base (2) and an annular housing front (3), and a circuit-board ring (8) having LEDs (8b) and plugs (8a) is installed in the housing base (2).

2. Cover element (1) according to Claim 1, **characterized in that** the light of the LEDs is introduced into the carrier plate by means of an optical unit (9).

3. Cover element (1) according to Claim 2, **characterized in that** the optical unit (9) is part of the carrier plate (6).

4. Cover element (1) according to Claim 2 or 3, **characterized in that** the optical unit (9) is a cone which extends from the carrier plate (6) towards the LEDs (8a).

5. Cover element (1) according to one of the preceding Claims 2 to 4, **characterized in that** the film (5) extends towards the optical unit (9) in the region of the optical unit (9) at an angle relative to the plane of the film (5).

6. Cover element (1) according to one of the preceding claims, **characterized in that** the light is guided between the film (5) and the upper side of the heating plate (7).

7. Cover element (1) according to one of the preceding claims, **characterized in that** the light is output through the film (5) and the front plate (4) by selection of the material of the upper side of the heating plate (7) or by installation of geometrical structures on the heating plate (7).

8. Cover element (1) according to one of the preceding claims, **characterized in that** the heating plate (7) is fastened by means of pins (7a) in recesses of the circuit-board ring (8) or in sockets of the housing base (2).

9. Method for manufacturing a cover element (1) according to one of Claims 1 to 8, **characterized by** the following steps:
- in a first step (S1), the film (5) is placed in a first tool half (10) of the injection-moulding tool,
- in the second step (S2), the film (5) is overmoulded transparently and the front plate (4) is thus produced,
- in the third step (S3), the heating plate (7) is placed in the second tool half (11) of the injection-moulding tool,
- the tool is rotated in the fourth step (S4) and the heating plate (7) is then overmoulded with a transparent material of the carrier plate (6) (S5),
- in step S6, the injection-moulded assembly is hard-lacquered or immersed in a hard lacquer.

## Revendications

1. Élément de recouvrement (1) comprenant un boîtier formé d'un film (5) qui est surmoulé et encapsulé entre une plaque avant (4) et une plaque de support (6) et qui sert à représenter des structures multidimensionnelles, la plaque de support (6) étant reliée du côté arrière à une plaque chauffante (7), **caractérisé en ce que** le boîtier comprend une base de boîtier annulaire (2) et une face de boîtier annulaire (3), un anneau de circuit imprimé (8) pourvu de LED (8b) et de connecteurs (8a) est incorporé dans la base de boîtier (2).

2. Élément de recouvrement (1) selon la revendication 1, **caractérisé en ce que** la lumière des LED est injectée par couplage dans la plaque de support par le biais d'une optique (9).

3. Élément de recouvrement (1) selon la revendication 2, **caractérisé en ce que** l'optique (9) fait partie de la plaque de support (6).

4. Élément de recouvrement (1) selon la revendication 2 ou 3, **caractérisé en ce que** l'optique (9) est un cône qui s'étend depuis la plaque de support (6) vers les LED (8b).

5. Élément de recouvrement (1) selon l'une des revendications précédentes 2 à 4, **caractérisé en ce que** le film (5) s'étend dans la zone de l'optique (9) angulairement par rapport au plan du film (5) vers l'optique (9).

6. Élément de recouvrement (1) selon l'une des revendications précédentes, **caractérisé en ce que** la lumière des LED (8b) est guidée entre le film (5) et le côté supérieur de la plaque chauffante (7).

7. Élément de recouvrement (1) selon l'une des revendications précédentes, **caractérisé en ce que** la lumière des LED (8b) est délivrée en sortie par couplage par le biais du film (5) et de la plaque avant (4) par sélection de la matière du côté supérieur de la plaque chauffante (7) ou par incorporation de structures géométriques sur la plaque chauffante (7).

8. Élément de recouvrement (1) selon l'une des revendications précédentes, **caractérisé en ce que** la plaque chauffante (7) est fixée par le biais de broches (7a) dans des évidements de l'anneau de circuit imprimé (8) ou dans des logements de la base de boîtier (2).

9. Procédé de fabrication d'un élément de recouvrement (1) selon les revendications 1 à 8, **caractérisé par** les étapes suivantes :
- dans une première étape (S1), le film (5) est inséré dans une première moitié d'outil (10) de l'outil de moulage par injection,
- dans la deuxième étape (S2), le film (5) est surmoulé de manière transparente et la plaque avant (4) est ainsi réalisée,
- dans la troisième étape (S3), la plaque chauffante (7) est insérée dans la deuxième moitié d'outil (11) de l'outil de moulage par injection,
- dans la quatrième étape (S4) l'outil est mis en rotation et la plaque chauffante (7) est ensuite surmoulée (S5) avec une matière transparente de la plaque de support (6),
- dans l'étape S6, le paquet moulé est recouvert d'un vernis dur ou plongé dans un vernis dur.
